# EUROPEAN PATENT APPLICATION

(11) **EP 0 962 854 A2**
(43) Date of publication of application: **08.12.1999**
(21) Application number: 99201215.3
(22) Date of filing: 20.04.1999
(51) Int. Cl.: G06F 3/12

(54) **Job selection for use in a prepress printing environment**

(30) Priority: 03.06.1998 US 90042
(71) Applicant: Agfa Corporation, Ridgefield Park, NJ 07660-2199 (US)
(72) Inventor: Boyle, Robert G., Methuen, Massachusetts 01887 (US)
(74) Representative: Van Ostaeyen, Marc Albert Jozef

(57) **Abstract**

A print drive system (41) for controlling the operation and printing of raster image files in a prepress printing environment (32) includes: a processing unit (76) for converting object oriented files into the raster image files; memory (75, 80) for storing the object oriented files and the raster image files; at least one graphical user interface (60, 62) for facilitating operator interaction with the print drive system (41); a job selection application program for selecting a next job to be printed; and a print engine (59) for printing the selected next job. A preferred method for selecting the next job to be printed includes the steps of: generating a job profile for each job located on a predefined job list by applying predefined criteria: and selecting the next job to be printed from the job list by comparing the job profiles.

## Description

The invention relates generally to imagesetting and electronic prepress systems and methods for enhancing system workflow. More particularly, the present invention is directed towards systems and methods for selecting from a job list a next job to be processed for printing in a prepress printing environment. The job processing typically entails processing page description format (PDF) data files, such as PostScript™ files, into raster data files and thereafter rendering the raster data files to an output device such as a printer or proofer.

### BACKGROUND OF THE INVENTION

As known in the art of electronic prepress systems, a selected output device, such as an imagesetter, printer or platesetter, is typically electrically connected to a dedicated raster image processor (RIP) connected between a front-end computer (hereinafter "front-end") and the output device. Electronic prepress image data file sizes are often greater than 100 megabits per page, and the large file requirements have historically restricted electronic prepress systems to dedicated proprietary hardware and software systems which use parallel data transfer methods to provide high speed data transfer rates between the front-end, the RIP and the output device

More recently, use of page description languages, such as Postscript™, have allowed object oriented descriptions of large image data files containing both text and graphics to be transferred efficiently over serial data communication lines, as used in network systems and adopted in electronic prepress systems, for transferring serial image data in page description formats between a front-end and a RIP. Serial data transfer systems offer the advantage that two way communications between the front-end and the RIP allow status information and other commands and files to be transferred in either direction.

The RIP is said to "rasterize" a PDL image file by performing operations such as image screening, color separating, imposition, trapping and various other prepress image preparation operations upon the PDL image data to yield raster image data in bitmap format. The raster image data is then transferred to the output device over a parallel data transfer interface in order to provide an efficient data transfer rate, thereby, keeping the output device operating at a desired operating speed. Typically, the process of rasterizing or RIPing data has been slow, sometimes causing the output device to remain idle while waiting for a RIP to prepare the next bitmap image file.

Even more recently the use of a RIP multiplexer (MUX), e.g. MULTISTAR® offered by Agfa Corporation in Wilmington, Massachusetts, has offered the electronic prepress industry some improvement in data throughput and cost savings, by functioning as a page buffer between one or two RIPs, and a single output printing device. Cost savings and improved efficiency have been realized by either RIPing a PDF image data file with a first RIP while transferring a previously RIPed image data file to the output device or by storing a RIPed image data file for transfer to the output device at an appropriate time after RIPing. This more fully utilizes the output device, or print engine, which is typically an expensive resource. In fact, keeping the print engine busy is a key design goal of any electronic prepress system design.

One problem of the prior art has been that in order to transfer bitmap data between a RIP and a MUX, or between a MUX or a RIP and an output device, it has been necessary to use a parallel communication interface in order to provide data transfer rates which are fast enough for transferring very large image data files, e.g. image data files in excess of 100 megabits per page, at rates which provide efficient workflow. Prior art bitmap data parallel transfer interface systems, e.g. Agfa Printer Interface Standard (APIS) or Small Computer Systems Interface (SCSI) systems, use a data transfer protocol to identify the data file format and convert serial data into 8 bit parallel data formats. Then, the 8 bit data is transferred over parallel data interface cables which provide a plurality of separate wires bundled together, each transmitting data in parallel. However, since parallel data transfer methods are restricted to one way data transfer, e.g. between the RIP and MUX or between the MUX or RIP and an output device, a serial data channel has also been provided bundled within, or in addition to, the parallel data interface cable to provide two way communication for protocol and other message or file communication between the RIP and the MUX or between the RIP or MUX and the output device or between the front-end and the RIP, the MUX or the output device. One significant drawback of a parallel data transfer interface has been that the cable length is limited in order to maintain efficient and effective data transfer. In some operations, cable length may be limited to about 25 feet requiring that the RIP, MUX and output device each be locally connected to each other and usually all within the same room. This shortcoming of the prior art has limited prepress systems to local connectivity and slowed the development of automation features needed in modern prepress workflow environments. A need exits for better overall control of the RIP, MUX and output process by a system administrator. Features such as job queuing, equipment swapping, and manipulating, editing, storing and transferring previously RIPed bitmap image data are needed in the modern prepress environment.

For electronic prepress systems which have employed imagesetters as print engines to create pages, typically, these devices have been driven by a dedicated RIP or a MUX. The RIP/Imagesetter or RIP/MUX/Imagesetter combination has been very productive in creating pages. Except for the most complex jobs, the RIP has advanced so that it is not the bottleneck in the pre-press workflow of page creation.

Today's needs for developing large format imagesetters, platemakers and on-press plate imaging, go well beyond creating just pages. These devices produce press size flats in film or plate that may contain four, eight, or more pages. These devices have also been driven by a RIP or MUX, but unlike page format imagesetters, the RIP can be the bottleneck in creating press format films and plates.

As the needs of the electronic, prepress industry steadily move towards large format imagesetters and the direct-to-plate workflow, it becomes imperative that the output devices be supplied data at rates which meet their specified throughput requirements. This means that the workflow system must be able to perform at or better than print engine speed. Notwithstanding the advent of RIPs operating at faster processing speeds, direct RIP to print engine configurations cannot guarantee meeting these requirements, especially as large-format, very complex jobs become more and more common.

In addition, with the advent of platesetters and direct-to-press prepress systems, a need also exists to provide a digital proofing device capable of providing either a color or black and white proof of the final image since films which used to provide analog proofs have often been eliminated from the prepress workflow. Such proofing systems may accept image files as page description data, screened bitmap data or bitmap data which has not been screened. A need therefore exists to redirect image data to a proofer, and that data may need to be prepared in an appropriate format for output by the proofer.

Many of the above shortcomings in the prior art have been addressed and corrected in the parent application. However, a need still exists for providing prepress printing systems which will automatically provide appropriate job selection in accordance with customer preferences for optimum efficiency.

Typically for electronic prepress and imagesetting systems of the prior art, a print job (hereinafter a "job") required that a specific output device be connected to the system before the job could be processed. For example, a job requiring a particular imagesetter for an output device, or a particular medium type or size loaded onto the output device, could not be processed into raster data if the particular output device and corresponding media requirements were not met. Such a condition may cause a system delay or require that a front-end operator physically change the medium or output device connected to the RIP in order to continue processing and outputting image files.

Since the electronic and imagesetting systems of the prior art were not only device-dependent but medium-dependent as well, the queuing of rasterized print jobs was not possible. Thus, the choice of the output device and print medium proved to be a considerable hindrance in productivity.

Another expensive resource, front-end operators, are kept busy by controlling the transfer of bitmap image data between a RIP and a MUX. Burdening these operators with control of the output process reduces overall system efficiency. By moving control of the RIPing and image output process to a system administrator, the front end operator and the front-end itself become free to function more efficiently.

One of the biggest shortcomings of electronic prepress systems of the prior art has been the inability to automatically control and monitor the queuing of output jobs and to make changes in the order or priority of image output either from the RIP of from the output device. This and other shortcomings are overcome in view of the claimed invention as supported in the attached description and drawings.

### SUMMARY OF THE INVENTION

A print drive system for controlling the operation and printing of raster image files in a prepress printing environment includes: a processing unit for converting object oriented files into the raster image files; memory for storing the object oriented files and the raster image files: at least one graphical user interface for facilitating operator interaction with the print drive system; a job selection application program for selecting a next job to be printed; and a print engine for printing the selected next job. A preferred method for selecting the next job to be printed includes the steps of: generating a job profile for each job located on a predefined job list by applying predefined criteria; and selecting the next job to be printed from the job list by comparing the job profiles.

### BRIEF DESCRIPTION OF THE DRAWINGS

The aforementioned aspects and other features of the invention are described in detail in conjunction with the accompanying drawings in which the same reference numerals are used throughout for denoting corresponding elements and wherein:
Figure 1 is a block diagram of a prior art electronic prepress system;
Figure 2 is a block diagram of a prepress printing system which can be used to implement the inventive job selection method;
Figure 3 is a detailed block diagram of the print drive component of the system of Figure 2;
Figure 4 is a block diagram of a preferred output architecture for use in accordance with the principles of the invention;
Figure 5 is a table defining various job output states in accordance with the principles of the invention;
Figures 6A, 6B and 6C are flow chart diagrams of a preferred job selection method in accordance with the principles of the invention; and
Figure 7 is a flowchart diagram of a preferred plane selection method in accordance with the principles of the invention.

### DETAILED DESCRIPTION OF THE PREFERRED EMBODIMENTS

The following terms are defined for use throughout this patent application.

| | |
|---|---|
| APIS | Agfa Print Engine Interface is a proprietary point to point data transmission protocol consisting of a serial bi-directional command channel (APIS serial) and a parallel uni-directional data channel (APIS video). |
| Device API | Generic Application Programming Interface for output devices. |
| Engine | A hardware device capable of receiving and printing raster image data on film or other media. An output printing device. Also referred to as "print engine". |
| Fast Ethernet (100 BaseT) | Communication medium, 100 Mb/sec maximum transfers over twisted pair wire. |
| File | Storage for one separation, i.e. each separation or plane of a job is stored in its own file. |
| GUI | Graphical User Interface which most broadly represents all the hardware, software and firmware necessary to implement interaction between the computer system and the user. Typically a keyboard, mouse, monitor and associated drivers and programs. |
| Job | One or more related pages together constitute a "job". |
| Job Control Server | The print drive subsystem that controls access to the print drive Job List and job entries on the list. |
| Job List | This is a user created list of jobs to be imaged, i.e. printed, under the control of the print drive system. |
| Job State | Current read-only State of a Job. (E.g., Hold, Imaging, Spooling, etc.). |
| MUX | Multiplexer |
| Page | One or more related separations together constitute a "page". For example, the cyan, magenta, yellow, and black separations for page 3. |
| Pickable Job | A job which passes all the user defined criteria checks. |
| Plane | Same as Separation |
| PDF | Page description format |
| Print drive configuration server | The print drive subsystem that controls print drive client access to the Windows NT registry section for the print drive. |
| Registry | Place in NT where static information about installed software is held. |
| RIP | Raster image processor. This device RIPS or rasterizes object-oriented PDF files into bitmapped raster data. |
| SCSI | Small Computer System Interface is a standard high-speed parallel interface defined by the X3T9.2 committee of the American National Standards Institute (ANSI). Used for connecting microcomputers to peripheral devices, other computers and local area networks. |
| Separation | A single 1-bit raster image as output from a RIP. A separation is an image representation of a single color channel. For example, "the cyan separation". This is also referred to as a "plane". One separation is stored in a file. |
| Spindle | Choice of media holding device for use on an engine. |
| Spooling | Inputting a job. |

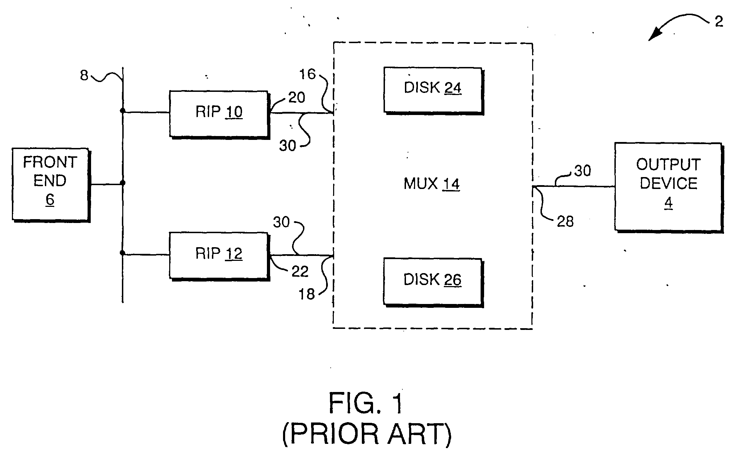

Figure 1 illustrates a prior art prepress system, referred to generally by reference numeral 2 comprising an output device 4, at least one computer terminal or front-end 6, for creating, editing or otherwise preparing image data for printing and especially halftone black and white or color printing as may be output by an imagesetter or platesetter for eventual image reproduction by a printing press using a printing plate. The front-end 6 is connected via a network serial data interface 8 to two raster image processors 10 and 12. The RIPs 10 and 12 receive, from the front-end 6, image data which is typically in the form of a page description language or other object oriented text and graphic representation of the image to be printed.

A multiplexer 14 includes two input ports 16 and 18 connected to the output ports 20 and 22 of the RIPs 10 and 12, respectively. Two large format disk drives 24 and 26 act as image data buffers which are included in the MUX 14 for storing image data. The primary purpose of the MUX 14 is to function as a page buffer for the output device 4. A MUX output port 28 connects with the output device 4. In the prior art, all data transferred from the RIP output ports 20 and 22 to the MUX 14, or from the MUX 14 to the output device 4, or within the MUX 14 to the disk drives 24 and 26 has been convened to bitmap raster data. The data transfer has been made over parallel data transfer cables 30.

As previously stated, the shortcomings of the prior art have included the inability to manage the RIPing and outputting functions of the prepress process by a system administrator and the costly proprietary hardware with few, but costly, expansion opportunities provided for the prepress customer. However, RIP and output management has been addressed in the parent application no. 08/869,244 where a print driver is employed as a replacement for, and an extension of, the multiplexer 14 of the prior art.

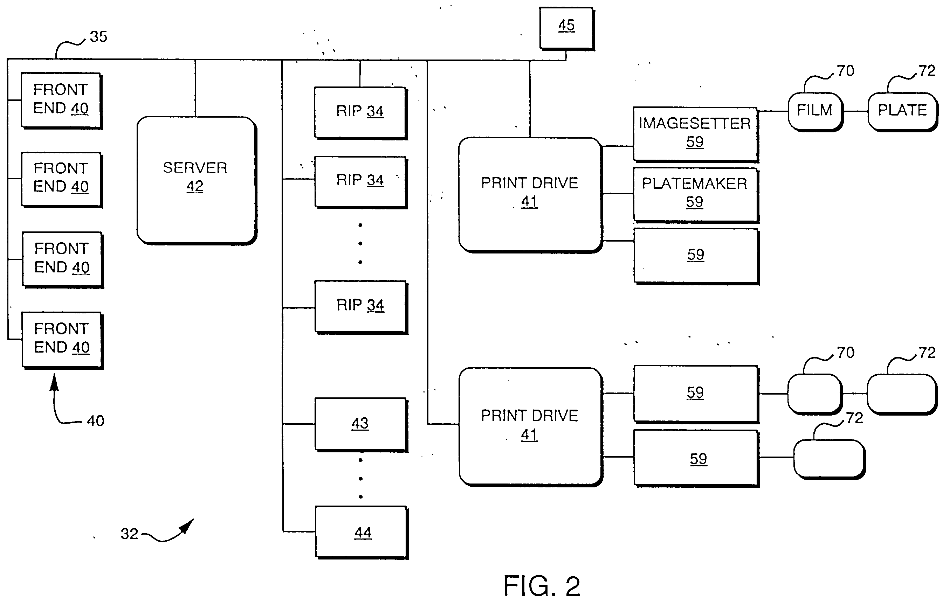

FIG. 2 is a block diagram of a preferred hardware embodiment of a prepress system including one or more print drives in which the inventive job selection method can be implemented. The various components of the prepress system 32 are preferably interconnected via a fast Ethernet network 35 utilizing TCP/IP data transfer protocol. The prepress system 32 is configured for controlling RIPing and output workflow and for providing more flexible operating and expansion options to the prepress customer. This prepress system 32 includes: one or more RIPs 34; one or more front-ends 40; one or more print drives 41; one or more servers 42 for storing image and other data files; one or more proofers 43 or other output devices 44 (such as a printer); and another computer system 45 which may be used for system administration. Each of the above and any other added network components may be either locally or remotely interconnected.

One or more output devices 59 are connected to the print drives 41. The output devices 59 may include any output devices which are used in a prepress system or in a printing environment, such as a printer, a print engine, a proofer, a filmsetter, an imagesetter, a platemaker or a computer-to-plate system. In any case, the output device 59 generates raster bitmap image data representing halftone or otherwise screened images for eventual transfer onto a film 70 or a printing plate 72 for reproduction by a printing press (not shown). Such output devices 59 may require proprietary or non-proprietary serial or parallel image data transfer from the print drives 41 of may require descreened bitmap data when the output device is a proofer 43, for providing a continuous tone proof of the image to be reproduced.

The RIPs 34 may be software RIPs or they may be dedicated hardware RIPs, such the Agfa Star™ hardware RIP available from Agfa Corporation in Wilmington, Massachusetts. Each RIP 34 appears on the fast Ethernet network 35 and can be accessed by any front-end 40, server 42, print drive 41 or other computer system 45, any of which may by either local or remote.

Each front-end 40, server 42, print drive 41 and other computer 45 is essentially a separate computer system each operating preferably on Windows NT™, although any available operating system can be used, such as a UNIX™ or a MAC OS™. An IBM PC™ or clone could be used for a print drive 41.

As described in the parent U.S. patent application no. 08/869,244, each RIP 34 includes a data compression module for compressing bitmap data. The compression module facilitates the use of serial bitmap data transfer over the fast Ethernet network 35, instead of parallel bitmap data transfer, by substantially compressing files to a size which allows for serial data transfer. The compression module compresses RIPed data which can be transferred either directly, or over the network 35, to one or more output devices 59 or to one or more print drivers 41. In the preferred case, each RIP 34 includes both a fast Ethernet interface board which facilitates transfer of the compressed data via TCP/IP protocol, and a data decompression board for decompressing the compressed data

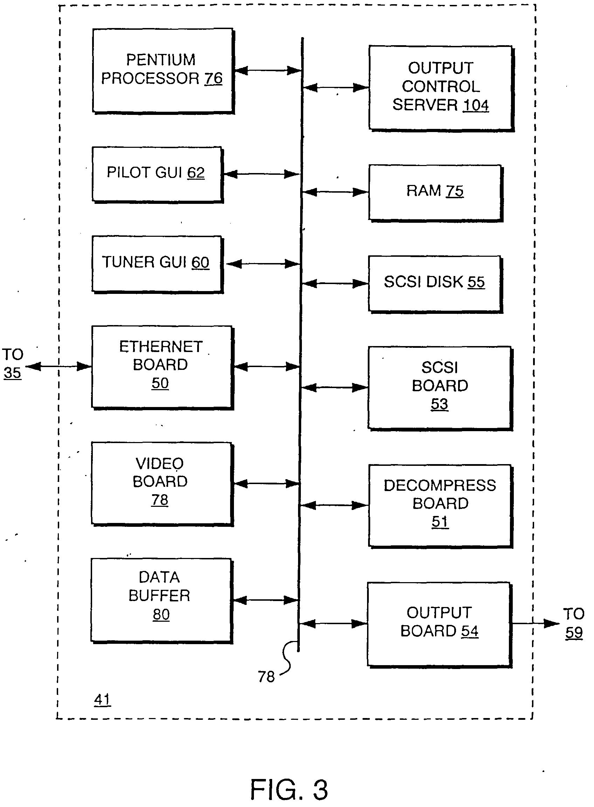

Turning to Figure 3 the print drive 41, which is essentially a special purpose computer, operates on a standard computer platform such as Windows NT™ configured for efficient print driving functions. The print drive hardware includes: a central processing unit such as a 200 mhz Pentium processor 76; sufficient random access memory (RAM) 75 for running the operating system and the various applications programs of the print drive 41; a data buffer 80 for temporary data storage of image data being transferred between the print drive and other prepress system components, and for temporary data storage of data being transferred between components within the print drive 41; one or more SCSI disks or other high capacity hard drives 55; a SCSI controller 53 for providing access to and from the SCSI disk 55; a decompression board 51 for decompressing compressed image data files stored in the disk 55 or received via the data buffer 80; a fast Ethernet board 50 for facilitating transfer of data over the fast Ethernet 35 by ensuring that data is formatted according to the well known TCP/IP protocol; a video board 78 for facilitating transfer of graphical data to a monitor for observation by a system operator; a pilot graphical user interface (GUI) 62; a tuner GUI 60; and an output board 54. The output board 54 may include a proprietary or standard data transfer protocol adapter module for interfacing with output devices 59. A preferred protocol is the Agfa Print Engine Interface Specification (APIS) which is a proprietary point-to-point data transmission protocol consisting of a serial bi-directional command channel and a parallel video uni-directional data channel.

Each graphical user interface typically includes a monitor, keyboard and mouse for user interaction with the print drives 41. The tuner GUI 60 controls the configuration and operation of the print drive 41 and is based upon standard Windows NT™ technology. The pilot GUI 62 is directed to provide an interactive link between the front-end users, typically MAC™ and PC™ networked users, and the print drive operator, typically a system administrator or prepress shop manager. Preferably, the tuner GUI 60 is run locally on the print drive 41. The pilot GUI 62 is preferably run remotely but can be run locally if desired. The preferred remote GUI pilot 62 may reside in the front-ends 40 or other terminals, e.g. in computer 45, and it is designed to accommodate a number of different user interface types, such as those used on a MAC™ or a PC™.

### ARCHITECTURE

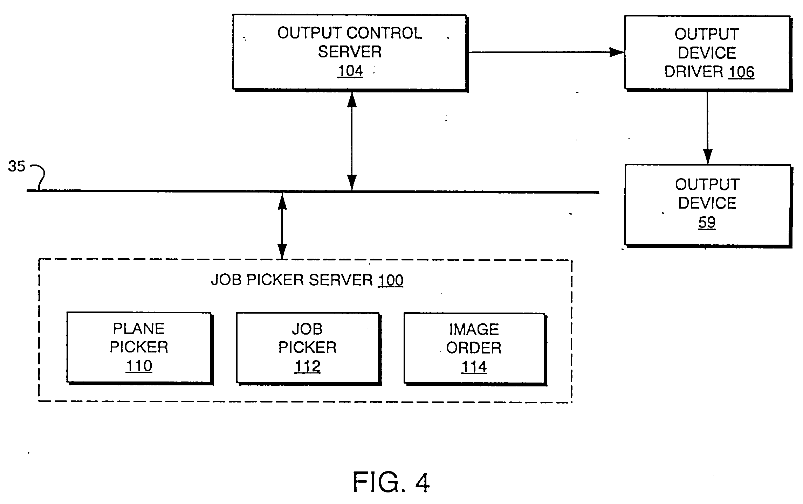

Figure 4 is a block diagram of a preferred output architecture for use in accordance with the principles of the invention. The fast Ethernet network 35 links each of the components together. The architecture includes an output control server 104, an output device driver 106, an output device 59 and a job picker server 100. In turn, the job picker server 100 includes a plane picker 110, a job picker 112 and a job order estimator 114. The output control server 104 is a print drive 41 component which uses the job picker 112.

The job picker server 100 provides three software routines. The first is a job picker routine 112 for selecting a next job for printing from a predefined list of jobs. The second is a plane picker routine 110 for selecting a next plane for printing from a predefined list of available planes. And the third is a job order estimator routine 114 which estimates the order in which jobs will be printed. Each of theses software routines is dependent upon a list of processing criteria to be described hereinafter.

The output control server 104 is a print drive 41 component which uses the job picker routine 112 to select the next job for printing, and uses the plane picker routine 110 to select the next plane within that picked job for printing. A preferred system design allows for the operator of the tuner GUI 60, which is local to and controls the print drive 41, to independently use the job order estimator routine 114 to display the estimated order of imageable jobs, that is, pickable jobs which the job picker routine 112 can send to the output device 59.

The processing criteria used as a basis for selecting a job, selecting a plane or estimating the order in which jobs will print, include preferences such as:
- Output Preference, i.e. whether to print after the first separation is input or, whether to print after the whole job is input.
- Priority Preference, such as urgent, high, normal or low.
- Creation Time and date on which the job was created.
- Image Condition Preference for an image condition to be enabled. For example, print only during second shift.
- Engine Name. The job may be designated as printable only on a particular type of machine, such as on an Agfa Galileo™ platemaker, or on a specific one of multiple machines of the same make and model.
- Medium Name. The job may be designated as printable only on a particular type or size medium, such as on a 445 x 660 mm plate.

Other criteria or preferences which are useable within a prepress printing environment can be used, if desired.

When a job on the job list passes all the criteria checks it is considered pickable. A criterion, i.e. a preference, passes the criteria check when the specific condition of the criterion is met. The job picker 112 then selects, based first on the priority preference and then (if two or more jobs have the same priority) on the creation time, the next imageable job, i.e. the next job to be printed. Once a job is picked, the output control server 104 can use the job picker 112 to select and return planes in the selected job for imaging. Likewise, a GUI application can retrieve and display the estimated order of printing pickable jobs from the job list.

The output control server 104 uses the job picker 112 to select the next best job to image on an output device 59. After a next job is selected, the output control 104 makes use of the plane picker routine 110 to get each individual separation of the selected job. If desired, a GUI application could allow the user to get the estimated order in which jobs will be printed by calling a get picker list software program. When this routine is called, the job picker 112 checks all jobs in the current job list and returns a list of jobs which meets the defined criteria.

The print drive configuration includes a generic application programming interface (API) for output devices. The job control server 104 controls access to the job list information.

The job picker routine 112 maintains a local copy of preferences or job selection criteria, which are read from the print drive area of the Windows NT™ registry. These preference values are read via the print drive API and stored into memory. Whenever a preference is changed by the user, a notification is sent to retrieve the changed value from the NT Registry.

The job picker routine 112 interfaces both directly and indirectly to the following print drive components: output control; configuration server API; engine manager class; and image condition manager class.

Output control calls the job picker routine 112 to get the next job for imaging to the connected device. When the output control calls the job picker routine 112, it passes a list of media status objects which must include a print drive medium name and a flag specifying whether the required medium is loaded onto the print engine. The job identification of the picked job, and the status of the medium to be used with the picked job are returned from the job picker routine 112.

The job picker routine 112 uses the engine manager class after it has determined the best job to pick. It is called to validate the job to make sure it will physically fit on the connected engine's medium and, to make sure that the picked job is still present on the job list. The engine manager validates the job.

The job picker routine also interfaces to one of the image condition manager methods. This is used by the Picker Checks routine for checking image conditions. It specifically determines if a particular image condition is enabled.

The job picker 112 contains interfaces that are setup and used at the time the job picker 112 is actually initiated by the output control server 104. The various interfaces include an engine manager class interface, an observer interface and an image condition manager interface. The job picker routine 112 initiates an interface or class called the Engine Manager. This class is used by several different print drive components for different reasons. The job picker routine 112 uses this class for job validation.

The preference values are derived from an observer class or interface that allows the reception of notifications when certain events occur in the print drive system 41. The job picker routine 112 will attach, e.g. sign up for notification, to the print drive configuration API via its subject. This effectively causes the job picker routine 112 to be notified whenever the user modifies the settings of one or more preferences. The job picker routine 112 can then update its local preferences by re-reading them via the print drive configuration server API.

The job picker routine 112 initiates an Image Condition Manager interface during initialization. This interface is used internally by the job picker routine 112 to update a cache of image conditions that are read via the print drive configuration server API. The methods of the Image Condition Manager are available for usage by the job picker routine 112.

### JOB PICKER ALGORITHM

The job picker routine 112 effectively generates a job profile for each job located on a predefined job list by applying predefined criteria, then selecting a next job to be processed from the job list by comparing the job profiles.

The print drive operator can input preference information for a new job via the tuner GUI 60. The preference information may include:
- Output Preference, i.e. whether to print after the first separation is input or, whether to print after the complete job is input.
- Priority Preference, such as urgent, high, normal or low.
- Creation Time and date on which the job was created.
- Image Condition Preference for an image condition to be enabled, such as, print after 1:00pm.
- Engine Name. The job may be designated as printable only on a particular type of machine, such as on an Agfa Galileo™ platemaker, or on a specific one of multiple machines of the same make and model.
- Medium Name. The job may be designated as printable only on a particular type or size medium, such as on a 445 x 660 mm plate.

The output preference specifies whether the job can be printed immediately after the first separation is input, or whether the whole job must be input before printing can begin.

The priority preference, such as urgent, high, normal or low, allows the user to create or modify the priority of a job. Other priorities could be used, if desired. Jobs that do not meet the priority preference are not allowed to print. The priority preference in the preferred embodiment takes precedence over all other preferences other than creation time and date. For example, if two jobs at different priorities are eligible to output, the higher priority job is picked first. However, if two jobs with identical priority preferences are eligible for output, then the job with the earliest creation time and date will print first.

The image condition preference is unique from the other preferences by enabling jobs to print which are contingent upon a particular condition precedent. These conditions can vary from customer to customer and are defined via the tuner GUI 60. For example, the operator may wish to defer printing of a particular job Z until after jobs A, D and G have been printed. Other image condition preferences include, but are not limited to, printing:
- At 10:30AM on Monday, June 15, 1998.
- Anytime after noon on the 15^{th} of the month.
- Only during second shift.
- Subject to an unconditional hold, i.e. not printing until specifically released by the operator.

The operator also must select a particular print engine by its engine name, and a particular type and size of medium for the job to be pickable. Other preferences could be easily added to the routine if desired, such as an operator name, a customer name, a product name, a customer prioritization number, the time and date of creation of a new job, the maximum deferral preference, etc. The maximum deferral preference is used by the job picker routine 112 after all jobs on the job list have been checked to see if they are pickable or not. All pickable jobs are associated with a particular available medium. When the available medium is actually loaded on the output device, the medium is considered selected.

When the job picker routine 112 is determining the next best job to image, it considers if the medium associated with the job is currently selected. When the medium is not currently selected, the job picker routine 112 can defer having the output device load the correct medium. The routine 112 will defer jobs that need a different medium selected and increment the current deferral count. When this deferral count is equal to the maximum deferral preference, the job picker is then allowed to pick a job that will need a new medium to be selected. The purpose for the maximum deferral preference is to allow the user to tune his or her system so that the output device will not be constantly loading a different medium on every job that is picked by the job picker routine 112. The media unloading and loading operations on an output device can be very time consuming.

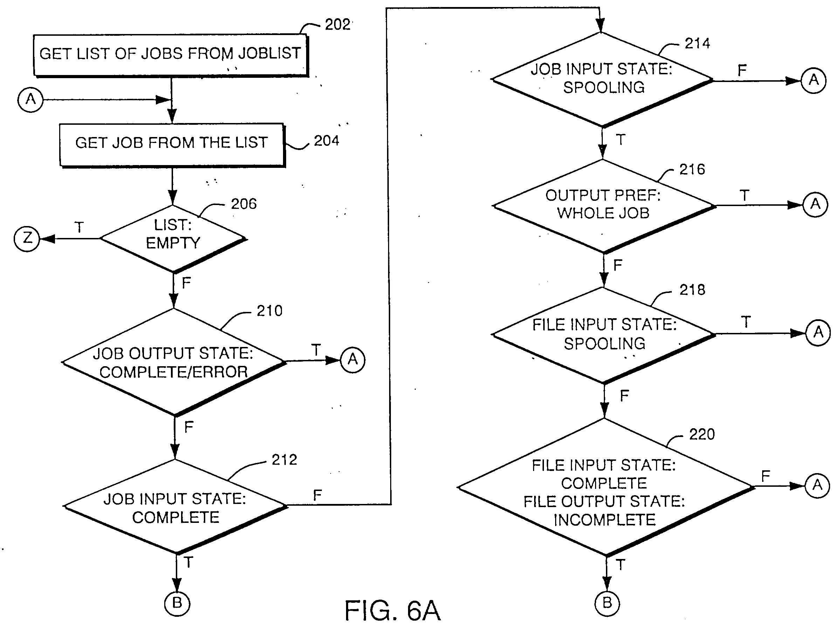

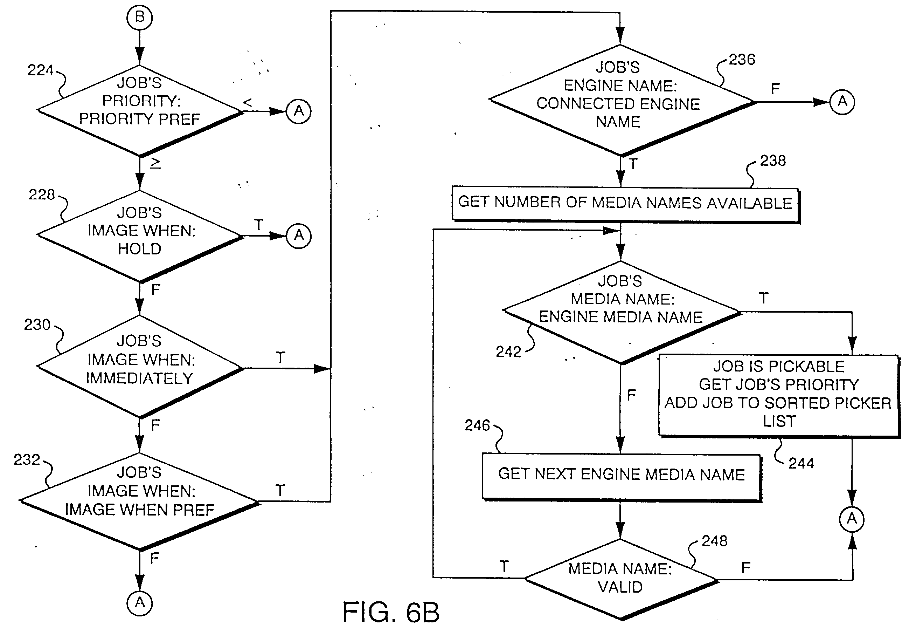

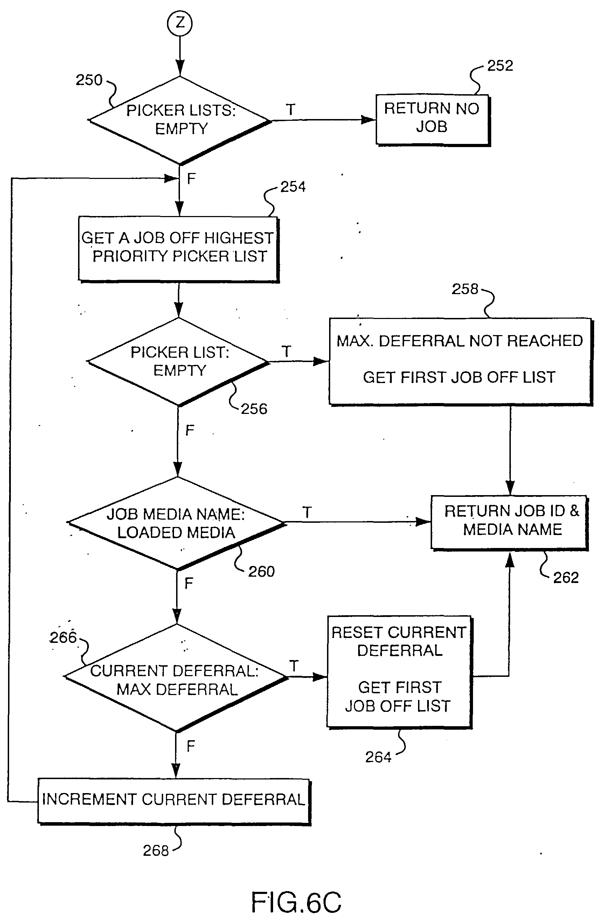

Figures 6A, 6B and 6C are flowchart diagrams of a preferred job selection method implemented by the job picker software 112 loaded into the print drive 41 for picking a next job for printing. The preferred method is actually a two pass procedure although a single or multiple pass variation of the same method could yield the same results. In the preferred method, the first pass as illustrated in Figures 6A and 6B makes a list of all pickable jobs and the second pass illustrated in Figure 6C picks the next job to print from the list of pickable jobs. After caching the preferences locally, the job picker routine 112 calls a common private Picker Check routine which reads the current job list, via the output control server 104, into the data buffer 80. The first pass uses this locally stored job list.

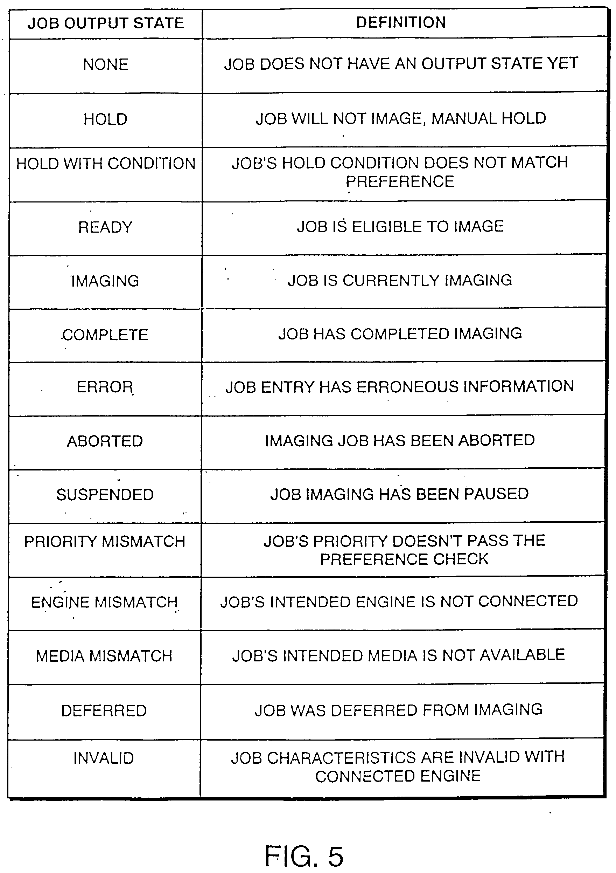

The processing criteria used as a basis for selecting a job, selecting a plane or estimating the order in which jobs will be printed, includes the above criteria or preferences. Additionally, the output and input states of the job are considered. Typical job output states are queued in Figure 5. The three possible input job states are "complete", "incomplete" or "error". An input job state of complete is realized when all the required preferences have been logged to allow a job to be pickable and when the image to be printed has been completely acquired or spooled into memory. If the required preferences have not been logged, or if the job has not been completely spooled, then the input state is considered to be incomplete.

A picker check subroutine is called from the job picker routine 112 to read the information associated with each job and check the information against the specified preferences. Each check is performed in sequence and if any checks fail to meet the criteria, the job is ineligible to be picked. See Figure 5 for a listing of the output states.

For this example, the job list is retrieved in block 202 of Figure 6A. In block 204 a job is selected from the job list and block 206 determines if the job list is empty. If the job list is empty, then the first pass for finding all pickable jobs is complete and no jobs are pickable. If the job list is not empty, then the current job output state (see Figure 5) is checked in block 210. If the current job has been completed, i.e. printing is complete, or if the output state is in error, then another job is retrieved from a list in block 204. Otherwise, if the current job is incomplete, then the job input state is tested in block 212. If the current job has been completely input, then the method continues in block 224, otherwise, block 214 tests if the input state of the current job is spooling. If the current job is not spooling, then another job is retrieved in block 204. Otherwise, block 216 tests if the output preference is to print after a single separation is received, or after the whole job is received. If the output preference is to print the whole job, then another job is retrieved in block 204. Otherwise, block 218 tests if the input state of the current separation is spooling. If the current separation is spooling, then another job is retrieved in block 204. Otherwise, block 220 tests if the current separation's input state is complete and the current separation's output state is incomplete. If not true, then another job is retrieved in block 204. Otherwise, block 224 in Figure 6B tests the current job's priority against the priority preference. If the job's priority is less than the priority preference, then another job is retrieved in block 204. Otherwise, block 228 tests for a conditional hold. If a job's image condition is an unconditional hold, then another job is retrieved in block 204. Otherwise, block 230 tests if the current job has no image condition. If true, then the method continues to block 236. Otherwise, block 232 determines if the image condition preference has been enabled. For instance, if the job is slated for printing during third shift, is that condition enabled. If not, then another job is selected in block 204. Otherwise, block 236 determines whether the job's engine name matches a connected engine name. If not, then another job is retrieved in block 204. Otherwise, a list of available media names are retrieved in block 238. Block 242 tests if the current job's medium name matches a media available on the named connected engine. If not, the next medium name is retrieved in block 246 from the media list. If the medium name is valid in block 248, then the routine loops back to block 242. Otherwise, another job is retrieved in block 204. If the current job's medium name matches the name of the media available on the named connected engine, then the current job is pickable and added to the sorted job picker list in block 244. Thereafter another job is retrieved in block 204.

When a job selected from the job list in block 204 successfully passes all the preference checks, it is added or returned to one of four newly created second pass job lists which are based, respectively, on each of the four priority preferences. After all jobs have been checked against the preferences in block 206, the job picker routine 112 starts its second pass in block 208.

The job picker's second pass consists of actually picking the next job to image. The pickable jobs that are highest in priority are always picked before lower priority jobs. Priority always takes precedence over any other criteria, except creation time and date. If two jobs both are urgent priority, then the job with the earlier creation time and date will be selected as the next job to be printed. Jobs are selected off the lists in the priority order of urgent, high, normal and low. A list is skipped if there are no job entries on it. Alternatively, if a single new job list is created rather than four new priority job lists, that new single list would order the jobs thereon by priority.

The second pass of the job picker routine 112 is outlined in Figure 6C. If no jobs are pickable as tested in block 250, then the routine returns that finding in block 252. Otherwise, a job is retrieved from the highest priority second pass job list in block 254. If the second pass job list is not empty when tested in block 256, then print priority from that list is established by the job having the earliest creation time and date. These parameters are tested in block 258, as well as the maximum deferral preference.

The job picker routine 112 stores the engine media that are currently loaded and available for immediate printing on the print engine. A job on a second pass job list is picked if the job's intended medium is available on the engine. Otherwise, the current deferral is checked against the maximum deferral preference. If the maximum deferral value has not been reached, then the job is skipped and its output state is marked as Deferred. When the maximum deferral preference has been reached, the current deferral value is reset and the first job (on that second pass job list) which was deferred is picked as the job to image. Otherwise, the job identification number and medium name are returned in block 262. If there are not enough jobs on the second pass job list to reach the maximum deferral value, then the first job which was deferred on that list is returned as the next job to image.

If the second pass job list is not empty as tested in block 256, then block 260 tests if the job medium name matches the medium loaded on the connected engine. If true, then block 262 returns the job identification and medium name. Otherwise, block 266 tests if the current deferral matches the maximum deferral. If true, then the current deferral is reset and the first job which was deferred is removed from that second pass job list. Otherwise, the current deferral is incremented in block 268, and the routine loops back to block 254 where another job is retrieved from the highest priority list. If no more jobs are listed on the highest priority list, then a job is retrieved from the second highest priority list, etc.

After a job is picked, a validation routine is called which makes sure that the selected job for printing next is still valid to image on the currently connected engine. This check ensures that the job will fit on the engine's selected medium and also that the job is still present on the selected second pass job list. If the picked job is invalid, its output state is marked as invalid and the second pass of the job picker processes again.

### PLANE PICKER ALGORITHM

The plane picker routine 110 provides a way for the output control server 104 to retrieve the next plane, i.e. the next image separation. There are three uses for this routine.
1. Check a job's image files and look for the first one that has been fully spooled without error and has not yet been output.
2. Using the collation job parameter, the plane picker routine 110 can return the same plane that is passed in, if the number of copies is greater than 0. This would be used for the case of imaging a job some number of times with Collation turned off. For example, the separations would image as CC MM YY KK.
3. Using the collation job parameter, the plane picker routine 110 can return the next image file after the one passed in, if its copies remaining is greater than 0. For example, the separations would image as CMYK CMYK.

The first case above is actually the way the job picker routine 112 checks an output state to determine if a job is ready to be imaged when the image condition preference is set to image immediately after the first separation is received. However, the main usage of this routine is by the output control server 104 to fetch the next image file for printing.

The plane picker routine 110 interfaces to both the output control server 104 and the job picker routine 112. As was previously described, the plane picker routine 110 can be used in several different ways. All callers must pass a job identification and a file name. The plane picker routine 110 will return a pointer to an image file class upon successfully finding the next plane to image, or it will return a null pointer if it fails to find a next plane to image.

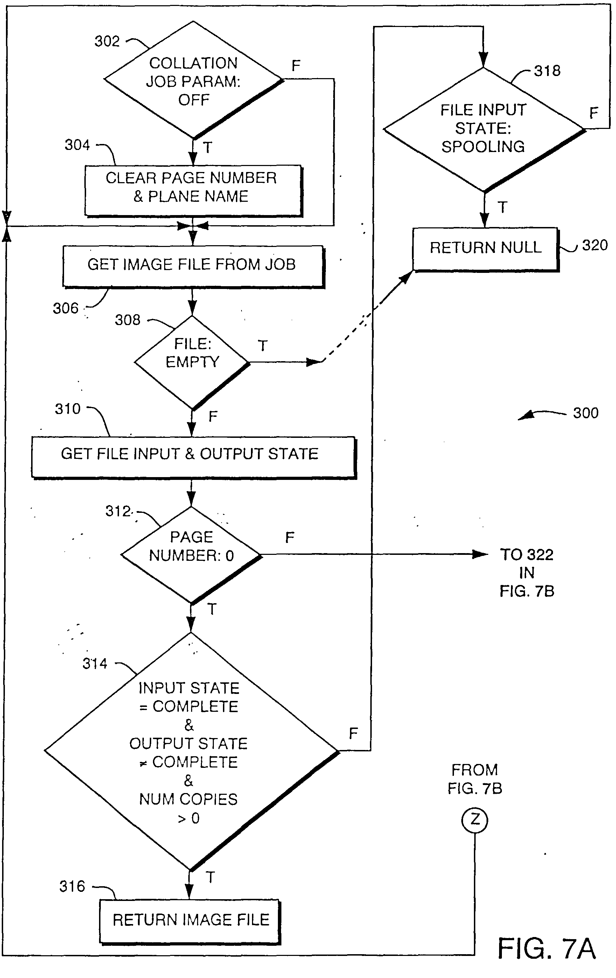

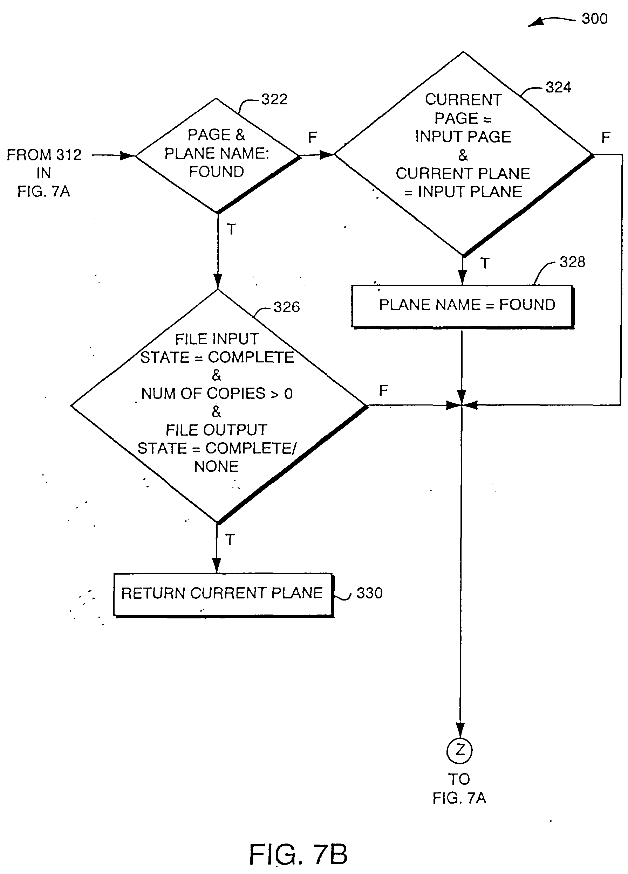

Figure 7 is a flow chart diagram of one preferred implementation 300 of the plane picker routine 110. In block 302 if the Collation job parameter is turned on, then the process continues in block 306. If the Collation job parameter is turned off, then the page number and plane name are cleared in block 304. An image file containing the data for a given image separation is retrieved from a selected spooled job in block 306. If the file is empty in decision block 308, then a null result is returned in block 320. Otherwise, the file input and output states are determined in block 310. If the page number of the job is 0 as determined in decision block 312, then the process continues at block 322. Otherwise, block 314 tests whether the input state is complete AND the output state is incomplete AND the number of copies to be printed is greater than 0. If true, then the image file is returned in block 316. Otherwise, block 318 tests whether the file input state is spooling. If true, then a null result is returned in block 320. Otherwise, the process continues in block 306.

Block 322 tests whether the page and plane name are found. If true, then the process continues in block 326. Otherwise, the process continues in block 324. Block 324 tests whether the current page equals the input page AND the current plane equals the input plane. If true, then the plane name is retrieved in Mock 328. Otherwise, the process continues in block 306.

Block 326 tests if the file input state is complete AND if the number of copies is greater than zero AND if the file output state is either complete or none. If these conditions are true, then the current plane is returned in block 330. Otherwise, the process continues in block 306.

Another embodiment of the plane picker routine 110 follows the steps of the above-described job picker routine 112. In other words, the process steps are essentially the same as those in the job picker routine except that the comparisons are made between separation or plane profiles to determine which separation should be the next separation to be printed, rather than between job profiles to determine which job should be the next job to be printed.

### JOB ORDER ESTIMATION ALGORITHM

The job order estimator routine 114 can be used by a GUI application to retrieve a snapshot of the pickable jobs currently on a job list, and to generate an estimated order in which jobs will be printed, subject to the existing criteria. The ordered image list is estimated, since jobs entering the system, a change of preferences, or a change in conditions can drastically change the list order in short notice.

This job order estimator routine 114 makes use of the common private method, picker checks, which reads the current job list into a local buffer. The routine 114 operates in exactly the same manner as the first pass of the job picker routine 112. After the pickable jobs are found, the routine 114 copies the job identification numbers into order of printing priority. Moreover, the job order estimator routine 114 interfaces both directly and indirectly to the following print drive components: configuration server API; engine manager class; and image condition manager class. These components were previously described in conjunction with the job picker routine 112.

It is to be understood that the above described embodiments are merely illustrative of the present invention and represent a limited number of the possible specific embodiments that can provide applications of the principles of the invention. For instance, the numerous programming parameters, preferences and other criteria described above could be varied to accommodate specific customer or operator requirements. Also the prepress hardware, operating systems, output devices and user interfaces could vary with known equivalent structures and methods. These, and other numerous and varied arrangements, may be readily devised in accordance with the principles of the invention by those skilled in the art without departing from the patented coverage of the methods and devices as claimed.

## Claims

1. A method (Figures 6A, 6B, 6C) for use in a prepress printing environment (32) characterised by the steps of:
generating a job profile for each job located on a predefined job list by applying predefined criteria; and
selecting a next job to be processed from the job list by comparing the job profiles.

2. The method of claim 1 wherein a job is defined as one or more pages, a page is defined as one or more separations, and a separation is defined as an image representation of a single color channel, each separation being stored in a separate file in memory.

3. The method of claim 1 wherein for each job the predefined criteria is defined by determining, in any order, at least one of:
whether the job has been fully spooled;
whether one or more separations have been fully spooled;
a priority;
whether an image condition has been enabled;
availability of a predefined medium;
availability of a processing engine; and
the job creation time and date.

4. The method of claim 3 wherein the priority is determined by evaluating a processing status as urgent, high, normal or low.

5. The method of claim 3 wherein the predefined medium is an image receiving medium.

6. The method of claim 3 wherein the processing engine is a print engine, a proofer, a filmsetter, an imagesetter, a platemaker or a computer-to-plate system.

7. A method for use in a prepress printing environment characterised by the steps of:
generating an image separation profile for each image separation, defined as a representation of one color channel of a predefined job on a predefined job list, by applying predefined preferences; and
selecting a next separation to be imaged onto an output device by comparing the image separation profiles.

8. The method of claim 7 wherein for each job the predefined preferences are defined by determining, in any, order, at least one of:
whether the separation has been fully spooled;
a priority;
whether an image condition has been enabled;
availability of a predefined medium;
availability of the output device; and
the creation time and date of the job related to the separation.

9. The method of claim 8 wherein the priority is determined by evaluating a processing status as urgent, high, normal or low.

10. The method of claim 8 wherein the predefined medium is an image receiving medium.

11. The method of claim 8 wherein the output device is a print engine, a proofer, a filmsetter, an imagesetter, a platemaker or a computer-to-plate system.

12. A print drive system (41) for controlling the operation and printing of raster image files in a prepress printing environment (32), the print drive system (41) comprising:
a processing unit (76) for converting object oriented files into the raster image files;
memory (75, 80) for storing the object oriented files and the raster image files;
at least one graphical user interface (62, 60) for facilitating operator interaction with the print drive system (41);
a job selection application program for generating a job profile for each job located on a predefined job list by applying predefined criteria, and selecting a next job to be processed from the job list by comparing the job profiles; and
a print engine (59) for printing the selected next job.

13. The print drive system (41) of claim 12 wherein a job is defined as one or more pages, a page is defined as one or more separations, and a separation is defined as an image representation of a single color channel, each separation being stored in a separate file in said memory.

14. The print drive system (41) of claim 12 wherein for each job the predefined criteria is defined by determining, in any order, at least one of:
whether the job has been fully spooled;
whether one or more separations have been fully spooled;
a priority;
whether an image condition has been enabled;
availability of a predefined medium;
availability of the print engine (59); and
the job creation time and date.

15. The print drive system (41) of claim 14 wherein the priority is determined by evaluating a processing status as urgent, high, normal or low.

16. The print drive system (41) of claim 14 wherein the predefined medium is an image receiving medium.

17. The print drive system (41) of claim 14 wherein the print engine (59)is a proofer, a filmsetter, an imagesetter, a platemaker or a computer-to-plate system.
